Europäisches Patentamt

European Patent Office

Office européen des brevets

(11) Veröffentlichungsnummer : **0 344 804 B1**

(12) **EUROPÄISCHE PATENTSCHRIFT**

(45) Veröffentlichungstag der Patentschrift :
**23.09.92 Patentblatt 92/39**

(51) Int. Cl.⁵ : **B65G 37/00, B65G 1/04,
B65G 17/20**

(21) Anmeldenummer : **89110043.0**

(22) Anmeldetag : **02.06.89**

(54) **Hängefördersystem.**

(30) Priorität : **03.06.88 DE 3819008**

(43) Veröffentlichungstag der Anmeldung :
**06.12.89 Patentblatt 89/49**

(45) Bekanntmachung des Hinweises auf die
Patenterteilung :
**23.09.92 Patentblatt 92/39**

(84) Benannte Vertragsstaaten :
**AT CH DE FR GB IT LI**

(56) Entgegenhaltungen :
**AT-B- 367 713
DE-A- 2 215 252
DE-A- 3 130 024
GB-A- 2 094 770**

(73) Patentinhaber : **Schönenberger
Systemtechnik GmbH
Justus-von-Liebig-Strasse 12
W-8910 Landsberg/Lech (DE)**

(72) Erfinder : **Langenbacher, Thomas
Katharinen 29
W-8910 Landsberg (DE)**
Erfinder : **Schönenberger, Rolf, Dipl.-Ing.
Dipl.-Wirtsch.Ing.
Wettersteinstrasse 28
W-8910 Landsberg (DE)**

(74) Vertreter : **Patentanwälte Grünecker,
Kinkeldey, Stockmair & Partner
Maximilianstrasse 58
W-8000 München 22 (DE)**

EP 0 344 804 B1

## Beschreibung

Die Erfindung bezieht sich auf ein Hängefördersystem der im Oberbegriff von Anspruch 1 erläuterten Art.

Lager- bzw. Zwischenlagerstrerken für Hängefördersysteme bestehen gegenwärtig aus einer Reihe parallel zueinander angeordneter Schienenstücke, die mit freien Enden in eine Gasse münden. In der Gasse ist per Hand ein Umsetzwagen verfahrbar, der mit Schienen bestückt ist, deren Enden ebenfalls freiliegen. Der Umsetzwagen kann vor ein freies Ende einer ausgewählten Lagerschiene gefahren werden, wobei die freien Enden der Lagerschiene und der Schiene des Umsetzwagens miteinander fluchtend gehalten werden, so daß Transportmittel von der entsprechenden Lagerschiene auf den Umsetzwagen und von dort auf eine weitere Lagerschiene geführt werden können. Ein derartiger Umsetzwagen ist jedoch lediglich von Hand zu betreiben.

Der Erfindung liegt somit die Aufgabe zugrunde, ein Hängefördersystem derart auszugestalten, daß auch ein automatisierter Betrieb möglich wird.

Die Aufgabe wird durch die kennzeichnenden Merkmale des Anspruches 1 gelöst.

Durch die erfindungsgemäße Ausgestaltung wird eine Art "Lokomotive" für die Paletten geschaffen, die den Antrieb und die Steuerung der Palette übernimmt, wobei von einem Wagen mehrere Paletten nacheinander bzw. sogar gleichzeitig bedient werden können.

Von besonderem Vorteil ist die Ausgestaltung des Wagens gemäß Anspruch 2 als "intelligente Einheit", wodurch der Wagen in der Lage ist, sich seinen Weg selbständig zu suchen. Dabei kann das Abfragen und das Verwerten der Informationen in der Steuereinheit auf dem Wagen selbst erfolgen, ohne daß eine größere Anzahl Steuerleitungen nachgeschleppt bzw. eine berührungslose Ansteuerung, wie sie bei verwinkelten räumlichen Gegebenheiten oft nicht möglich sind, erforderlich wären.

Durch die Ausgestaltung nach Anspruch 3 kann der Wagen die Palette selbsttätig bedienen, d.h. selbsttätig be- und entladen, wobei sich der Ladeantrieb nach Anspruch 4 als konstruktiv besonders zweckmäßig herausgestellt hat.

Zwar ist es z.B. aus der GB-A-20 94 770 bereits bekannt, einen seitlich verfahrbaren Ladeantrieb vorzusehen, der jedoch auf einem verfahrbaren Wagen angeordnet ist, der die Funktion der Palette übernimmt, d.h. mit den Aufnahmeeinrichtungen für die zu fördernden Gegenstände versehen ist. Darüber hinaus ist das dargestellte Fördersystem kein Hängefördersystem, sondern ein Flurförderer.

Durch die Anordnung von Sperrvorrichtungen an den freien Enden der Schienen wird verhindert, daß sich Transportmittel unbeabsichtigt entweder von der Lagerschiene oder der Palettenschiene lösen können.

Die konstruktiven Ausgestaltungen dieser Sperrvorrichtung und ihre Betätigung nach den Ansprüche 6 bis 8 haben sich als besonders zweckmäßig erwiesen.

Durch die in Anspruch 9 beschriebene Anordnung von Palette und Wagen übereinander können beide auf einer gemeinsamen Schiene mit zwei Laufbahnen verfahren werden, wobei auch das Ankoppeln und das Be- und Entladen erleichtert wird.

Anspruch 10 beschreibt ein besonders bevorzugtes Schienenprofil, wobei ein handelsübliches Profil verwendet werden kann.

Wird beispielsweise für das Schienenprofil ein handelsübliches Lochprofil verwendet, das an allen drei Seiten regelmäßig verteilte Stanzlöcher mit definierten Durchmessern enthält, so können diese Öffnungen gemäß den Ansprüchen 11 und 12 zum Verriegeln der Palette und/oder des Wagens in der vorgewählten Position benutzt werden. Für die Schiene können beispielsweise hochkant gestellte, handelsübliche U-förmige oder I-Profile verwendet und die Öffnungen gesondert eingebracht werden.

Gemäß Anspruch 13 kann jedoch auch die Steuerung und die Positionierung des Wagens über bereits im Schienenprofil vorhandene oder zusätzlich eingebrachte Steueröffnungen erfolgen. Dabei wird gemäß Anspruch 14 zweckmäßigerweise ein angetriebenes Ritzel an einer Öffnungsreihe entlanggeführt, wobei durch einen Inkrementgeber das Erreichen der gewünschten Position feststellbar ist. Gemäß Anspruch 15 kann die Steuerung zusätzlich oder alternativ durch optische Sensoren erfolgen, deren Lichtstrahl durch die Steueröffnungen geführt ist.

Ein Ausführungsbeispiel der Erfindung wird nachfolgend anhand der Zeichnungen näher erläutert. Es zeigen:

Fig. 1 eine Draufsicht in schematischer Darstellung auf das erfindungsgemäße Hängefördersystem,

Fig. 2 eine Vorderansicht eines Teils des Hängefördersystems aus Fig. 1,

Fig. 3 eine vergrößerte Seitenansicht des Ladeantriebs,

Fig. 4 eine vergrößerte Darstellung der Sperrvorrichtung,

Fig. 5 die Verriegelungsvorrichtung des Wagens,

Fig. 6 die Verriegelungsvorrichtung der Palette, und

Fig. 7 die Positioniervorrichtung des Wagens.

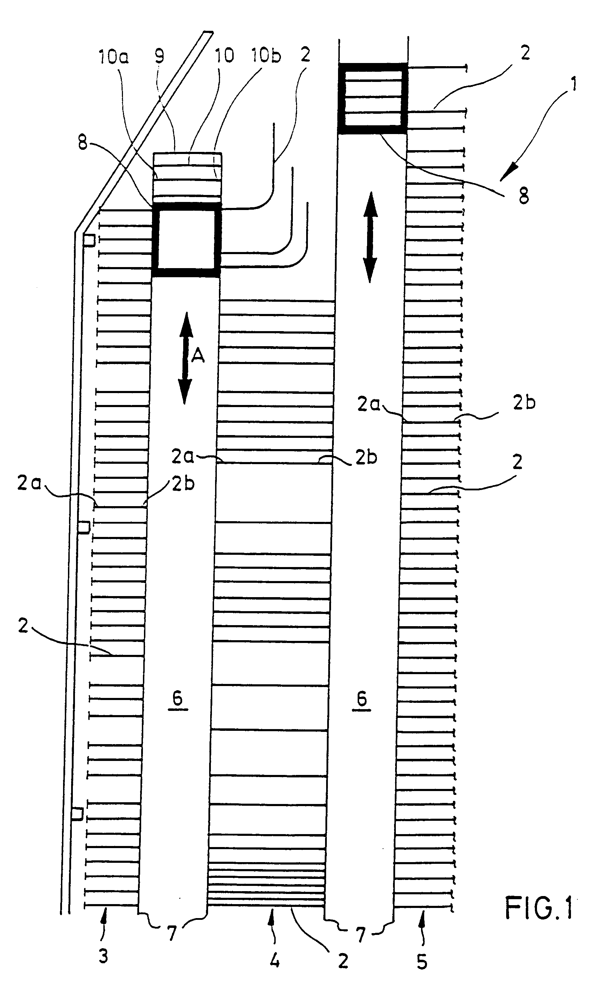

Aus Fig. 1 ist ein Hängefördersystem 1 ersichtlich, das z.B. als Materiallager, Material-Zwischenlager, Zuführstrecke, für Einzel-Arbeitsplätze oder für einen abteilungsübergreifendenden innerbetrieblichen Transport ausgebildet sein kann. Das Hängefördersystem 1 wird nachfolgend in seiner Form als Materiallager beschrieben. Dargestellt sind eine Mehrzahl erster Schienen, die im vorliegenden Ausführungsbeispiel als Lagerschienen 2 ausgebildet und in Reihen 3, 4 und 5 geordnet sind. Die Lagerschienen 2 bestehen aus Schienenstücken mit zwei freien Enden 2a, 2b und sind innerhalb jeder Reihe gleich lang und parallel zueinander angeordnet. Der Abstand von Lagerschiene zu Lagerschiene innerhalb jeder Reihe und die Längen der Lagerschienen in den verschiedenen Reihen richten sich nach den Abmessungen und der Anzahl der zu lagernden Gegenstände. Dabei münden die freien Enden 2a bzw. 2b der Lagerschienen 2 jeder der Reihen 3, 4 und 5 auf einer sich senkrecht zu den Lagerschienen 2 erstreckenden Linie. Die Reihen 3 und 4 bzw. 4 und 5 sind im Abstand zueinander angeordnet und bilden zwischen sich jeweils eine Ladegasse 6. Entlang der Ladegasse 6 erstreckt sich ein Paar parallel laufender zweiter Schienen 7. Jede der Schienen des Schienenpaares 7 verläuft parallel zu derjenigen Linie, zu der die anliegenden freien Enden 2a bzw. 2b der Lagerschienen 2 ausgerichtet sind. Die Schienen 7 beider Ladegassen 6 zwischen den Reihen 3 und 4 bzw. 4 und 5 sind durch eine Umsetzstrecke bzw. einen Kurvenbogen miteinander verbunden. Auf den Schienen 7 laufen in Richtung des Doppelpfeiles A Wagen 8, von denen zwei dargestellt sind. Nach Bedarf kann jedoch auch nur ein einziger oder mehr als zwei Wagen 8 eingesetzt werden. Jeder der Wagen 8 kann mit einer unter dem Wagen 8 ebenfalls auf der Schiene 7 laufenden Palette 9 gekoppelt werden. Dieser Koppelungszustand ist in der rechten Darstellung ersichtlich, während in der linken Darstellung Wagen 8 und Palette 9 entkoppelt sind. Auch die Anzahl der Paletten 9 kann nach Bedarf variiert werden, wobei einem Wagen 8 auch mehrere Paletten 9 zugeordnet werden können. Die Palette 9 ist mit einer oder mehreren Palettenschienen 10 versehen, die die gleiche Gestalt wie die Lagerschienen 2 haben und ebenfalls zwei freie Enden 10a bzw. 10b aufweisen. Dabei sind die beiden freien Enden 10a und 10b der Palettenschiene 10 durch das Verfahren der Palette 9 fluchtend mit jeweils anliegenden freien Enden 2b bzw. 2a der Lagerschienen 2 ein- oder beidseitig der Ladegasse 6 auszurichten.

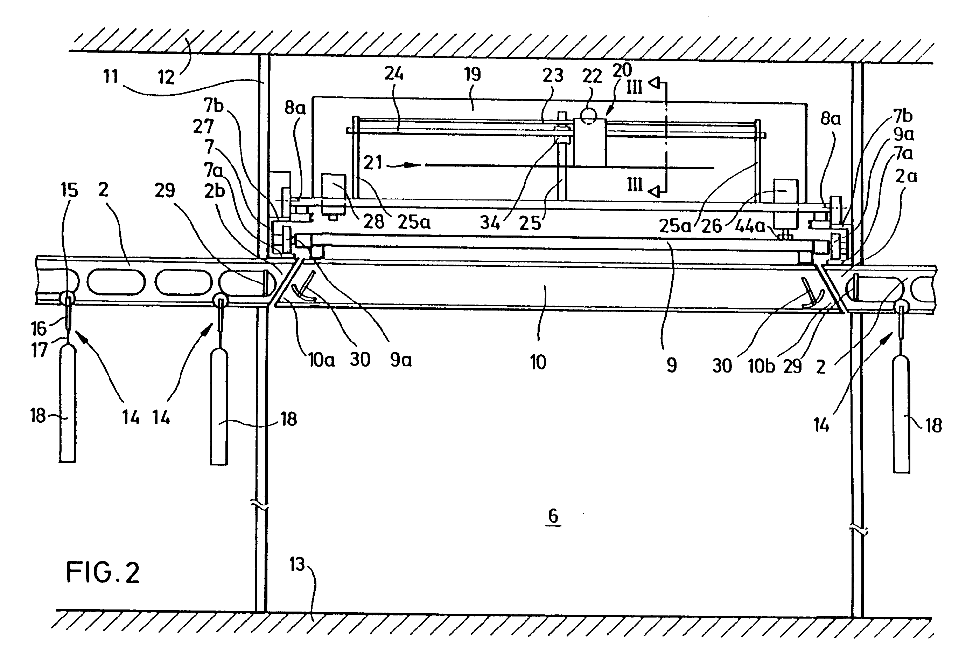

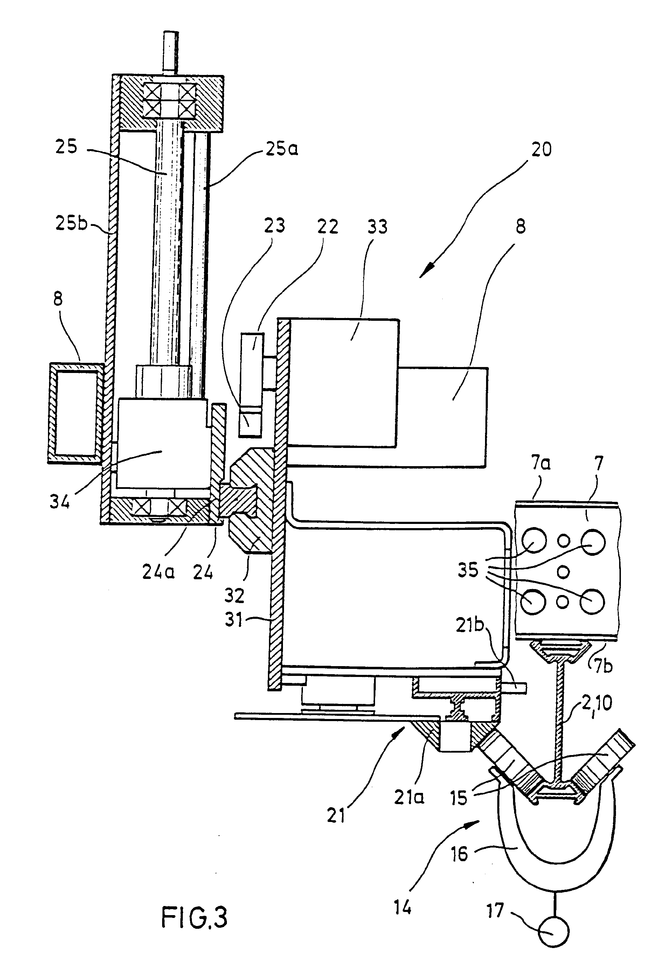

Die Lagerschienen 2 und die zweiten Schienen 7 sind, wie aus Fig. 2 ersichtlich, mit Hilfe von Trägern 11 an der Decke 12 bzw. dem Fußboden 13 eines Betriebsraumes befestigt. Auf den Lagerschienen 2 können beispielsweise bekannte Transportmittel 14 verfahren werden. Die Transportmittel 14 bestehen aus zwei im Winkel zueinander angeordneten Laufrollen 15 und einem die Laufrollen 15 verbindenden Bügel 16, an den mittels eines Aufhängers 17 ein zu transportierender Gegenstand 18, beispielsweise ein Kleidungsstück, angehängt wird (vgl. auch Fig. 3). Zu diesem Zweck weisen sowohl die Lagerschienen 2 als auch die Palettenschienen 10 den in Fig. 3 dargestellten, an sich bekannten Querschnitt mit zwei im rechten Winkel zueinander angeordneten Laufbahnen auf. Die Schienen 7 sind U-förmig ausgebildet und oberhalb der freien Enden 2a bzw. 2b der Lagerschienen 2 an den Trägern 11 derart befestigt, daß ihr Steg senkrecht steht und ihre Profilöffnungen einander zugewandt sind. Auf dem unteren Steg 7a läuft die Palette 9 z.B. mit in das Profil der Schiene 7 hineinreichenden, bekannten Laufrollen-Stützrollen-Kombinationen 9a aus zwei zueinander rechtwinklig versetzten Rollen. Eine derartige Kombination 9a ist bevorzugt an jeder der vier Ecken der als rechtwinklige Rahmenkonstruktion ausgebildeten Palette vorgesehen.

An der Unterseite der Palette 9 sind die Palettenschienen 10 derart angeordnet, daß zumindest eines der freien Enden 10a bzw. 10b der Palettenschiene 10 in einer vorbestimmten Stellung der Palette 9 mit einem der freien Enden 2a bzw. 2b einer der Lagerschienen derart fluchtend ausgerichtet ist, daß ein Transportmittel von der Lagerschiene 2 auf die Palettenschiene 10 bzw. zurück verschiebbar ist.

Auf dem oberen Steg 7b der Schienen 7 läuft eine Laufrollen-Stützrollen-Kombination 8a des Wagens 8, die wiederum in bereits bekannter Weise aus zwei zueinander versetzt angeordneten Stütz- bzw. Laufrollen besteht. Auch der Wagen 8 ist als rechteckförmiger Rahmen ausgebildet, wobei jeweils eine der Kombinationen 8a an jeder Ecke vorgesehen ist.

Der Wagen 8 trägt eine Steuereinheit 19, die in einem Steuerkasten staub- und klimageschützt aufgenommen ist. Auf dem Wagen 8 ist ein nicht gezeichneter Antriebsmotor zum Antrieb des Wagens 8 untergebracht. Der Wagen 8 enthält weiterhin einen noch näher zu beschreibenden Ladeantrieb 20, der ein in einer waagerechten Ebene endlos umlaufendes, angetriebenes Transportband 21 aufweist. Am Ladeantrieb 20 ist ein Zahnrad 22 vorgesehen, das mit einer am Wagen 8 angebrachten Zahnstange 23 in Eingriff tritt. Die Zahnstange 23 erstreckt sich quer zur Ladegasse 6 und parallel sowohl zur Palettenschiene 10 als auch zur anliegenden Lagerschiene 2. Der Ladeantrieb 20 ist auf einer Führungsstange 24 in waagerechter Richtung verschiebbar, die sich parallel zur Zahnstange 23 erstreckt. In senkrechter Richtung ist der Wagen 8 über eine von einem nicht gezeichneten Antrieb angetriebene Spindel 25 verfahrbar, wobei die Führungsstange 24 während der senkrechten Bewegung von senkrechten Stangen 25a geführt ist. Weiterhin enthält der Wagen 8 eine noch näher zu beschreibende Koppelungsvorrichtung 26 und eine Verriegelungsvorrichtung 27 für den Wagen 8 sowie eine Verriegelungsvorrichtung 28 für die Palette 9.

Jedes der freien Enden 2a bzw. 2b der Lagerschienen 2 ist mit einer Sperrvorrichtung 29 und jedes der freien Enden 10a bzw. 10b der Palettenschiene 10 mit einer Sperrvorrichtung 30 versehen.

Anhand Fig. 3 soll der Ladeantrieb 20 näher dargestellt werden. Fig. 3 zeigt einen Querschnitt durch den Ladeantrieb, wobei das Transportband 21 senkrecht zur Zeichnungsebene verläuft. Das Transportband 21 besteht aus einem endlosen Trägerband mit einem darauf befestigten Streifen 21a aus einem Reibmaterial, bevorzugt einem Schaumkunststoff, der einen etwa dreieckigen Querschnitt aufweist und so angeordnet ist, daß er mit der Lauffläche einer der Laufrollen 15 in gezeichneter Weise in Eingriff treten kann, so daß die Laufrolle 15 bei der Bewegung des Transportbandes 21 unter Abrollen mitgenommen wird. Das Transportband 21 ist mit seinem nicht gezeichneten Antrieb an einem Gestell 31 befestigt, das mit einer schwalbenschwanzähnlichen Führung 32 versehen ist. Die Führung 32 greift über die an einer Platte 24a befestigten Führungsstange 24 und hält das Gestell 31 in der vorbestimmten, senkrechten Lage. Auf der Platte 24a ist auch die Zahnstange 23 befestigt. Am Gestell 31 ist ein Betätigungsstift 21b vorgesehen, der in noch zu beschreibender Weise die Sperrvorrichtungen 29 und 30 öffnet.

Das Gestell 31 trägt weiterhin einen Antriebsmotor 33 für das Zahnrad 22. Wird somit das Zahnrad 22 durch den Motor 33 angetrieben, so bewegt sich das Gestell 31 zusammen mit dem Transportband 21 und dem Betätigungsstift 21b in Fig. 2 nach links oder nach rechts, und zwar so weit, bis zumindest ein Teil des Transportbandes 21 sowie der Betätigungsstift 21b in den Bereich der anliegenden Lagerschiene 2 reicht.

Die Platte 24a ist mit einer Spindelmutter 34 versehen, die die Gewindespindel 25 umschließt, so daß die Platte 24a mit der Führungsstange 24 und dem Gestell 31 in vertikaler Richtung bewegt wird, wenn sich die Spindel 25 dreht. Zur Unterstützung ist die Platte weiterhin über Wellenböcke mit Kugelbüchsen auf den senkrechten Stangen 25a geführt. Die senkrechten Stangen 25a sind zusammen mit den unbezeichneten Lagerungen für die Gewindespindel 25 auf einer Platte 25b montiert, die am Rahmen des Wagens 8 befestigt ist.

Wird somit die Gewindespindel 25 in der gewünschten Richtung angetrieben, so bewegen sich die Muffe 34 und mit ihr die Führungsstange 24 sowie das Gestell 31 mit dem Transportband 21 nach oben oder unten.

In Fig. 3 ist darüber hinaus zu sehen, daß die Schiene an ihrem Steg eine Anzahl gleich großer, in waagerechten Reihen angeordneter, gleich beabstandeter und zueinander ausgerichteter Öffnungen 35 enthält, deren Zweck weiter unten noch näher erläutert wird.

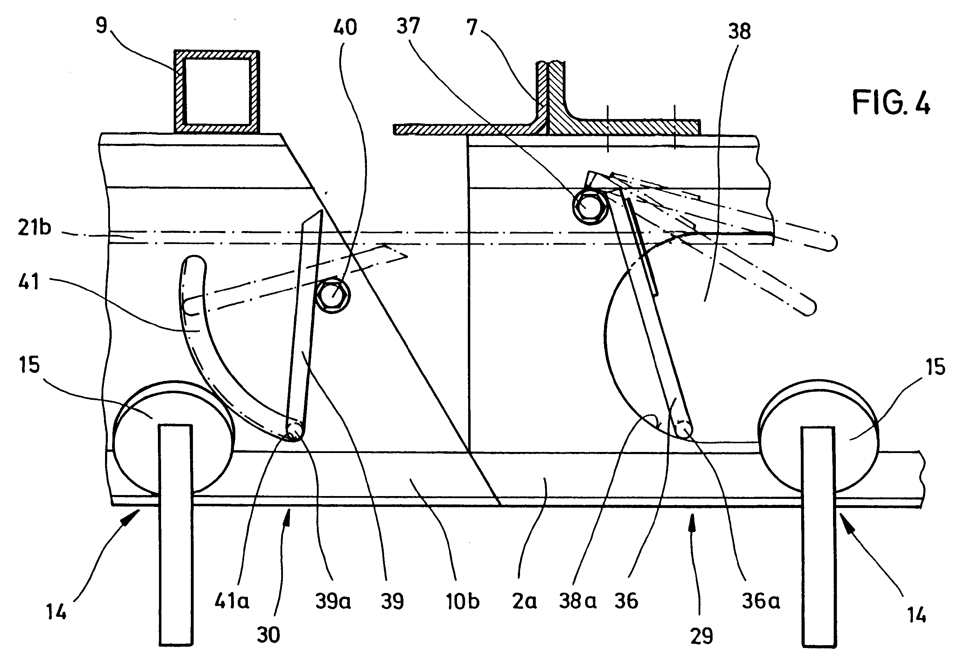

Fig. 4 zeigt in vergrößerter Darstellung die beiden Sperrvorrichtungen 29 und 30. Die Sperrvorrichtung 29 am freien Ende 2a der Lagerschien 2 weist einen abgekröpften Hebel 36 auf, dessen Abkröpfung 36a in den Laufweg der Laufrollen 15 eines Transportmittels 14 reicht. Der Hebel 36 ist an seinem der Abkröpfung 36a abgewandten Ende um einen Bolzen 37 schwenkbar, der fest mit dem freien Ende 2a der Lagerschiene 2 verbunden ist. Die Abkröpfung 36 ragt derart in eine der üblichen zur Gewichtsersparnis der Lagerschienen 2 vorgesehenen Ausnehmung 38, daß eine Kante 38a der Ausnehmung 38 als Anschlag dienen kann. Dabei befindet sich der Anschlag 38a an der vom freien Ende 2a abgewandten Seite der Senkrechten durch den Bolzen 37. Auf diese Weise kann der Hebel 36 nur vom freien Ende 2a der Lagerschiene 2 weggeschwenkt werden. Dabei wird der Hebel 36 in Anlage am Anschlag 38a durch die Schwerkraft gehalten, wobei zumindest in dieser Position die Abkröpfung 36a in den Laufweg der Laufrollen 15 ragt.

Die Sperrvorrichtung 30 der Palettenschiene 10 ist ähnlich aufgebaut und enthält wiederum einen Hebel 39 mit einer Abkröpfung 39a, der um einen Bolzen 40 verschwenkbar ist. Die Abkröpfung 39 durchragt entweder wiederum eine normalerweise vorgesehene Aussparung oder die dargestellte, bogenförmige Führung 41. Dabei ist zumindest der untere Teil 41a analog dem Anschlag 38a als Anschlag für die Abkröpfung 39a des Hebels 39 vorgesehen. Der Bolzen 40 ist jedoch nicht am der Abkröpfung 39a abgewandten Ende sondern derart angeordnet, daß der Hebel 39 ein Stück über den Bolzen 40 nach oben vorsteht. Auch der Hebel 39a wird durch die Wirkung der Schwerkraft in seiner Lage am Anschlag 41a gehalten.

Wenn sich somit ein Transportmittel 14 auf der Lagerschiene 2 in Richtung auf das freie Ende 2a bzw. ein weiteres Transportmittel 14 auf der Palettenschiene 10 in Richtung auf das freie Ende 10b bewegt, so stoßen die Laufrollen 15 jeweils an die Abkröpfungen 36a bzw. 39a und drücken diese noch fester gegen den Anschlag 38a bzw. 41a. Die Transportmittel 14 sind somit gegen ein Herausfahren gesichert.

Strichpunktiert eingezeichnet ist der Weg des Betätigunsstiftes 21b bei seinem Verschieben entlang der Zahnstange 23. Wie gezeigt, berührt der Betätigungsstift 21b auf seinem Verschiebeweg sowohl den Hebel 39, und zwar auf der oberhalb des Bolzens 40 liegenden Seite, als auch den Hebel 36, und zwar unterhalb des Bolzens 37. Auf diese Weise wird sowohl der Hebel 39 von seinem Anschlag 41a als auch der Hebel 36 von seinem Anschlag 38a abgehoben, so daß die Laufrolle 15 durchlaufen kann. Als weitere Besonderheit sei angemerkt, daß die freien Enden 10b bzw. 2a von Paletten- und Lagerschiene unter einem Winkel von ca. 60° korrespondierend zueinander abgeschrägt sind, so daß sich selbst bei geringfügigen vertikalen und/oder horizontalen Versetzungen der Schienen zueinander ein befriedigend glatter Übergang zum Abrollen der Laufrollen ergibt.

Die beschriebenen Abschrägungen und die Sperrvorrichtungen sind an allen freien Enden der Lager- und Palettenschienen vorgesehen.

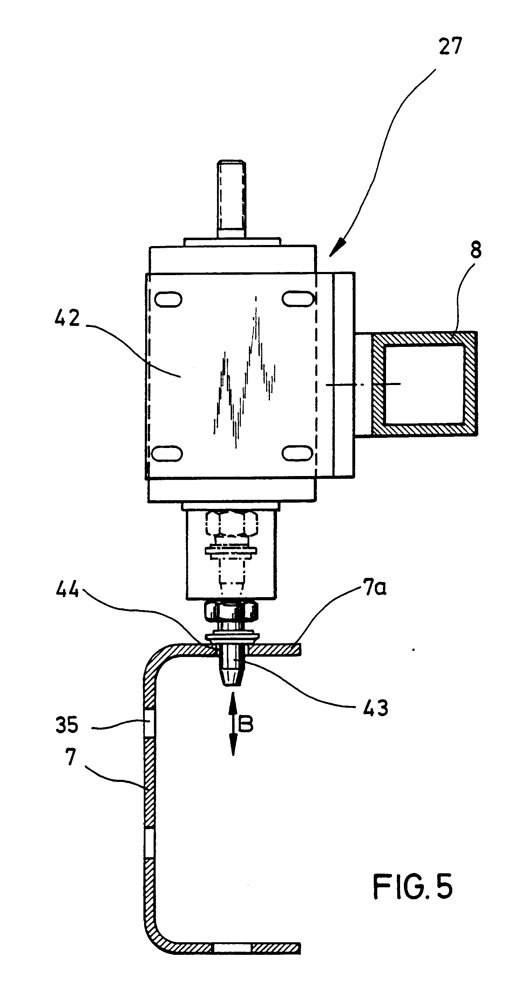

Fig. 5 zeigt die Verriegelungsvorrichtung 27 zum Verriegeln des Wagens 8 mit der Schiene 7. Die Verriegelungsvorrichtung 27 enthält einen Hubmagneten 42, der fest mit dem Wagen 8 verbunden ist. Durch den Hubmagneten 42 kann ein Bolzen 43 in Richtung des Pfeiles B aus der durchgezogenen in die gestrichelte Stellung und zurück bewegt werden. Der Bolzen 43 ist derart ausgebildet, daß er in Öffnungen 44 im oberen Schenkel 7a des U-Profils der Schiene 7 eingeschoben und aus ihnen zurückgezogen werden kann. Dabei sind die Öffnungen 44 ähnlich ausgebildet wie die Öffnungen 35, sind in Reihe entlang des Schenkels 7a angeordnet und befinden sich in einem Abstand zueinander, der das korrekte Positionieren des Wagens 8 in bezug auf die jeweils anliegenden freien Enden 2a bzw. 2b der Lagerschienen 2 erlaubt.

In ähnlicher Weise kann das Ankoppeln des Wagens 8 an die Palette 9 mit Hilfe der Koppelungsvorrichtung 26 erfolgen. Auch die Koppelungsvorrichtung 26 enthält einen Hubmagneten 42, der einen Bolzen 43 hebt und senkt. Der Bolzen 43 greift jedoch nicht in eine Öffnung in der Schiene 7 ein, sondern in eine analog der Öffnung 44 ausgebildete Öffnung einer Halterung 44a (Fig. 2) an der Palette.

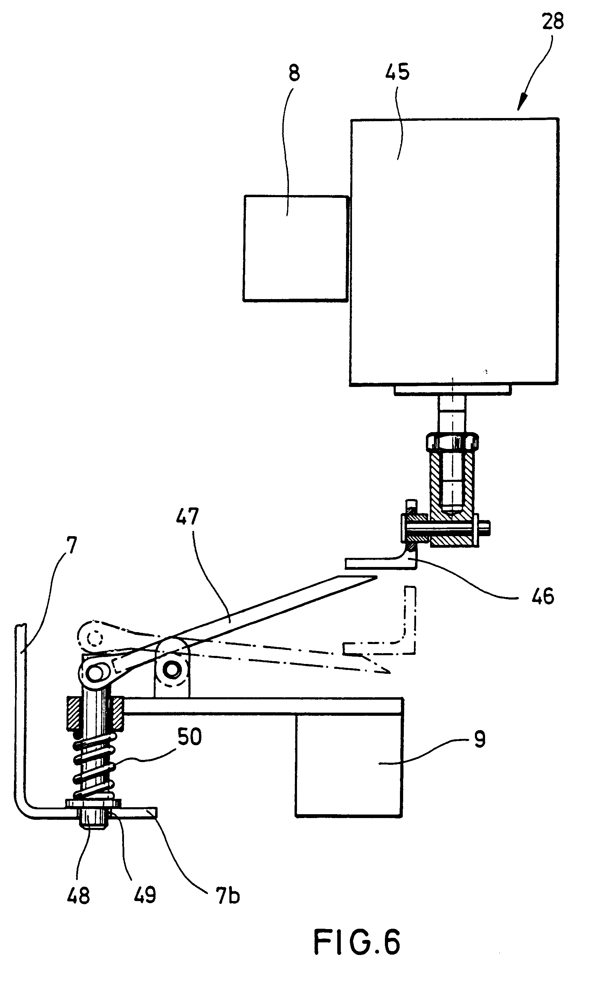

In Fig. 6 ist die Verriegelungsvorrichtung 28 für die Palette 9 ersichtlich. Die Verriegelungsvorrichtung 28 enthält wiederum einen am Wagen 8 angeordneten Hubmagneten 45, durch den eine Betätigungsschiene 46 auf- und abbewegt werden kann. Die Betätigungsschiene 46 erstreckt sich bevorzugt über die gesamte Länge des Wagens 8 parallel zur Schiene 7, um in jeder möglichen Stellung von Wagen 8 und Palette 9 zueinander ein Entriegeln der Palette 9 über den Hebel 47 zu ermöglichen.

An der Palette 9 ist ein doppelseitiger Hebel 47 drehbar gelagert, dessen einer Schenkel mit der Betätigungsschiene 46 in Eingriff treten kann, wenn diese nach unten ausgefahren ist und sich der Wagen 8 über der Palette 9 befindet. Das andere Ende des Hebels 47 trägt einen Bolzen 48, der sich analog des Bolzens 43 durch Öffnungen 49 im unteren Schenkel 7b der Schiene 7 erstreckt. Auch die Öffnungen 49 sind analog den Öffnungen 44 in Reihe angeordnet und derart beabstandet, daß die Palette 9 mit ihrer Palettenschiene zur gewünschten Lagerschiene 2 ausgerichtet werden kann. Der Bolzen 48 ist durch eine Feder 50 belastet, die den Bolzen 48 in die Öffnung 49 drückt, bis ihre Wirkung durch das Verschwenken des Hebels 47 aufgehoben wird.

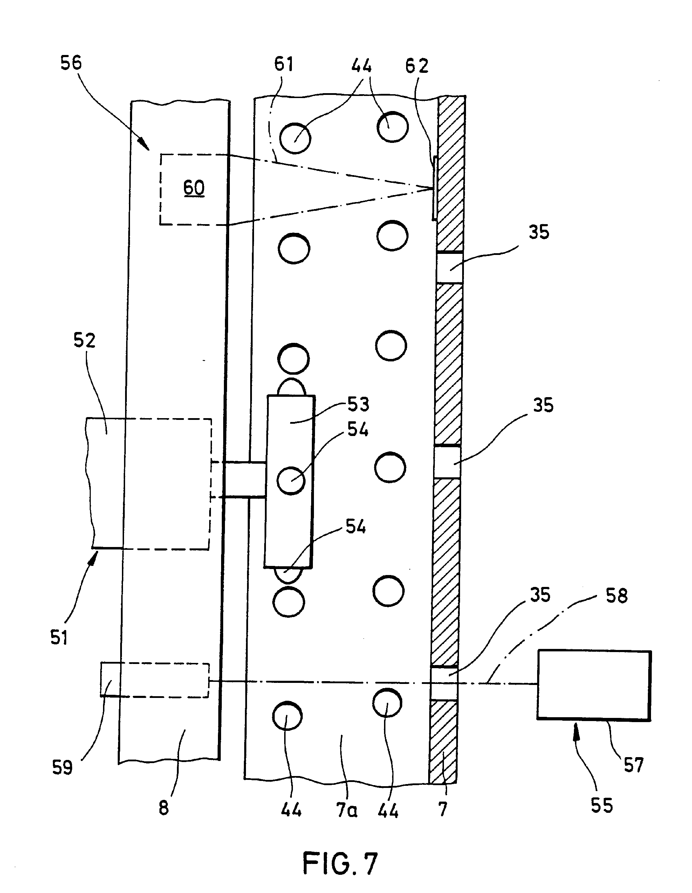

Aus Fig. 7 sind Positioniervorrichtungen des Wagens 8 ersichtlich, die allein oder in Kombination miteinander zu verwenden sind. Eine erste Positioniervorrichtung 51 enthält ein mit einem Inkrementgeber 52 verbundenes Ritzel 53, das drehbar am Rahmen des Wagens 8 befestigt ist. Das Ritzel 53 weist an seinem Umfang verteilt angeordnete Nocken 54 auf, deren Durchmesser und Umfangsabstand zueinander den in Reihe angeordneten Öffnungen 44 des Schenkels 7a der Schiene 7 entsprechen. Wird nun das Ritzel 53, angetrieben oder nicht angetrieben, über die Reihe der Öffnungen 44 geführt, so wird durch den durch jeden Eingriff eines Nockens 54 in eine Öffnung 44 bewirkten Reibkontakt der Inkrementgeber 52 um einen Schritt weitergeführt, wobei die notwendige Anzahl der abzugreifenden Öffnungen bis zu jeder möglichen Position in der Steuereinheit 19 gespeichert und abgerufen werden können. Gegebenenfalls kann das Ritzel 53 auch als Antrieb für den Wagen 8 dienen.

Es sind weitere Positioniervorrichtungen 55 und 56 vorgesehen, die fotosensitive Elemente zur Positionierung verwenden. Die Positioniervorrichtung 55 enthält einen Sender 57, der neben dem Weg des Wagens 8 jenseits der Schiene 7 angeordnet ist. Der senkrechte Steg der U-förmigen Schiene 7 ist angeschnitten, um zu zeigen, daß der vom Sender 57 ausgesandte Lichtstrahl 58 die Öffnung 35 im senkrechten Steg der Schiene 7 durchsetzt. Auf dem Wagen 8 ist ein Empfänger 59 angeordnet, der mit der Steuereinheit 19 verbunden ist. Sender und Empfänger können dabei so ausgebildet bzw. angeordnet sein, daß eine sichere Identifikation der Position des Wagens 8 möglich ist (beispielsweise durch Anordnung einer Vielzahl von Sendern und durch Abzählen).

Die weitere Positioniervorrichtung 56 verwendet eine mit dem Wagen 8 verbundene und an die Steuereinheit 19 angeschlossene Sende- und Empfangseinheit 60, die einen optischen Strahl 61 in Richtung auf die Schiene 7, und zwar auf deren senkrechten Steg, aussendet. Am senkrechten Steg der Schiene 7 ist an ausgewählten Stellen eine Reflexionsfolie 62 angeordnet, die dort den Strahl 61 zurück in die Sende- und Empfangseinheit reflektiert. Dort wird der Empfang registriert und zur Positionierung verwendet. Die Positioniervorrichtung 56 eignet sich besonders zur Feinpositionierung, nachdem durch andere Positioniervorrichtungen der Wagen 8 bis in die Nähe der gewünschten Position verfahren wurde. Zur Feinpositionierung kann jeweils eine der Reflexionsfolien 62 an den freien Enden 2a, 2b der Lagerschienen 2 angeordnet sein, wobei der Strahl 61 gegebenenfalls durch die Öffnungen 35 geschickt wird.

Für die Schiene 7 wird bevorzugt ein handelsübliches Lochprofil, in das bereits bei der Herstellung in Schenkel und Steg Löcher eingestanzt wurden, oder ein Lochblech in Verbindung mit einem ungelochten Profil verwendet. Diese Löcher können dann die Funktion der Öffnungen 35, 44 und 49 übernehmen, die nach Bedarf auch ausgetauscht werden können.So können die Öffnungen 44 bzw. 49 zur Positionierung und/oder die Öffnungen 35 zur Verriegelung eingesetzt werden.

Die Stromversorgung der Antriebe, wie z.B. des Zahnradantriebes, des Antriebes für das Transportband, des Antriebes der Gewindespindel sowie des nicht gezeichneten Fahrantriebes für den Wagen und für die Hubmagneten kann über eine nicht gezeichnete, an den Trägern 11 befestigte Stromschiene und einen am Wagen 8 befestigten Schleifkontakt als Stromabnehmer erfolgen. Die Konstruktion von Stromschiene und Schleifkontakt ist bekannt. Auch die Signale zur Steuereinheit 19 können über derartige Stromschienen mit Schleifkontakten übertragen werden.

Das erfindungsgemäße Hängefördersystem arbeitet wie folgt:

Sollen Gegenstände 18 z.B. von einer Lagerschiene 2 der Reihe 5 (Fig. 1) auf eine Lagerschiene 2 der Reihe 3 überführt werden, so wird zunächst der Wagen 8 über eine Palette 9 verfahren und mit Hilfe der Koppelungsvorrichtung 26 angekoppelt. Dann wird der Wagen 8 derart vor die ausgewählte Lagerschiene 2 der Reihe 5 verfahren, daß ein freies Ende 10b einer der Palettenschienen 10 fluchtend mit dem freien Ende 2a der ausgewählten Lagerschiene 2 ausgerichtet ist. In dieser Stellung wird der Wagen 8 durch Absenken des Bolzens 43 in die Öffnung 44 sowie der Palette 9 über den Hebel 47 und den Bolzen 48 in der Öffnung 49 der Schiene 7 arretiert. Das Transportband 21 wird durch Antrieb der Spindel 25 abgesenkt und durch Antrieb des Zahnrades 22 und dessen Eingriff mit der Zahnstange 23 nach rechts (Fig. 1) so weit ausgefahren, bis die Sperrvorrichtungen 30 und 29 geöffnet sind und sich der Streifen 21a aus Reibmaterial oberhalb einer der Laufrollen 15 des oder der zu überführenden Transportmittel befindet. Das Transportband 21 wird gegebenfalls noch etwas abgesenkt, um einen festen Reibeingriff zwischen dem Streifen 21a und der Laufrolle 15 zu erreichen. Dann wird der Antrieb des Transportbandes 21 eingeschaltet, so daß die ausgewählten Transportmittel 14 bei der Bewegung des Streifens 21a mitgenommen werden. Gleichzeitig kann der Ladeantrieb 20 wieder in den Bereich der Palettenschiene 10 zurückgezogen werden, wobei auch dadurch die Transportmittel 14 mitgenommen werden. Die Hebel 36 und 39 der Sperrvorrichtungen 29 und 30 fallen zurück, so daß die freien Enden 2a bzw. 10b wieder für den Durchlauf der Transportmittel 14 gesperrt sind. Ist dies geschehen, so wird der Ladeantrieb 20 angehoben. Durch den Hubmagneten 42 wird der Bolzen 43 aus der Öffnung 44 und durch den Hubmagneten 45 der Bolzen 48 aus der Öffnung 49 der Schiene 7 zurückgezogen, so daß nach dem Einschalten des Antriebs der Wagen bis in die gewünschte Stellung gegenüber der ausgewählten Lagerschiene der Reihe 3 verfahren werden kann. Die Bolzen 43 und 48 werden an einer Stelle abgesenkt, in der die Palettenschiene 10 mit der gewünschten Lagerschiene 2 der Reihe 3 fluchtend ausgerichtet ist. Der Ladeantrieb 20 wird abgesenkt, kommt in Kontakt mit den Laufrollen 15 und wird bis in den Bereich der Lagerschiene 2 verfahren, wobei gleichzeitig die Sperrvorrichtungen geöffnet werden. Dabei läuft das Transportband 21, so daß die Laufrollen auf die Lagerschiene 2 überführt werden.

Sollen Gegenstände 18 auf einer Palette 9 zwischengespeichert werden, so können die mit diesen Gegenständen 18 verbundenen Transportmittel in bereits beschriebener Weise auf die Palettenschiene 10 überführt werden. Der Wagen 8 verfährt mit der Palette 9 an die Zwischenlagerstelle. Die Betätigungsschiene 46 der Verriegelungsvorrichtung 28 wird durch den Hubmagneten 45 angehoben, so daß der Bolzen 48 unter der Wirkung der Feder 50 in die ausgewählte Öffnung 49 des unteren Schenkels 7b der Schiene 7 einrückt und die Palette 9 auf der Schiene 7 verriegelt. Durch Anheben des Bolzens der Koppelungsvorrichtung 26 werden Wagen 8 und Palette 9 getrennt, so daß der Wagen 8 über eine zweite Palette fahren und diese ankoppeln kann.

In Abwandlung des beschriebenen und gezeichneten Ausführungsbeispieles kann das erfindungsgemäße Hängefördersystem auch für andere Schienenarten und anders ausgebildete Transportmittel eingesetzt werden. Auf der Palette können eine oder mehrere der beschriebenen, geradlinigen Palettenschienen aber auch die im Stand der Technik bekannten Umsetzschienen angeordnet werden. Mit dem erfindungsgemäßen Wagen können weiterhin die beschriebenen Einzel-Transportmittel aber auch beispielsweise mittels Quertraversen verbundene Transporteinheiten sowie Förderzüge gehandhabt werden. Weiterhin können für die Palette und den Wagen zwei gesonderte Schienen oder ein anderes, gemeinsames Schienenprofil, auf dem beispielsweise die Laufrollen nebeneinander abrollenbeispielsweise die Laufrollen der Palette innen und die Laufrollen des Wagens außen - vorgesehen sein. Das An-und Absenken sowie das seitliche Verschieben des Ladeantriebes kann beispielsweise auch durch Hubzylinder oder ähnliche konstruktive Mittel erfolgen.

## Patentansprüche

1. Hängefördersystem mit einer Mehrzahl erster Schienen, die mit zueinander ausgerichteten freien Enden an einer Ladegasse anliegen, und mit einer auf zweiten Schienen in der Ladegasse verfahrbaren Palette, die mit einer Palettenschiene versehen ist, wobei beim Verfahren der Palette ein freies Ende der Palettenschiene mit freien Enden der ersten Schienen zum Überführen von Transportmitteln fluchtend ausrichtbar ist, **dadurch gekennzeichnet**, daß der Palette (9) ein in der Ladegasse (6) verfahrbarer, gesteuerter und angetriebener Wagen (8) zugeordnet ist, der getrennt von der Palette (9) verfahrbar und selbsttätig an die Palette (9) ankoppelbar ist.

2. Hängefördersystem nach Anspruch 1, **dadurch gekennzeichnet,** daß der Wagen (8) seine eigene Steuereinheit (19) trägt.

3. Hängefördersystem nach einem der Ansprüche 1 oder 2, **dadurch gekennzeichnet,** daß auf dem Wagen (8) ein Ladeantrieb (20) für die Transportmittel (14) zum Be-und Entladen der Palettenschiene (10) angeordnet ist.

4. Hängefördesystem nach Anspruch 3, **dadurch gekennzeichnet,** daß der Ladeantrieb (20) seitlich bis in den Bereich der ersten Schienen (2) ausfahrbar ist und an einem Transportmittel (14) angreift.

5. Hängefördersystem nach einem der Ansprüche 1 bis 4, **dadurch gekennzeichnet,** daß am freien Ende (2a, 2b, 10a, 10b) der Schiene (2, 10) eine Sperrvorrichtung (29, 30) für die Transpormittel (14) vorgesehen ist.

6. Hängefördersystem nach Anspruch 5, **dadurch gekennzeichnet,** daß die Sperrvorrichtung (29, 30) in einer vom freien Ende (2a, 2b, 10a, 10b) der Schiene (2, 10) wegführenden Richtung vom Transportmittel (14), und in einer zum freien Ende (2a, 2b, 10a, 10b) der Schiene (2, 10) hinführenden Richtung vom Wagen (8) zu öffnen ist.

7. Hängefördersystem nach einem der Ansprüche 4 bis 6, **dadurch gekennzeichnet,** daß die Sperrvorrichtung (29, 30) durch den seitlich ausfahrenden Ladeantrieb (20) zu öffnen ist.

8. Hängefördersystem nach einem der Ansprüche 5 bis 7, **dadurch gekennzeichnet,** daß die Sperrvorrichtung (29, 30) einen schwenkbaren Hebel (36, 39) enthält, der unter Schwerkrafteinwirkung in eine Sperrstellung fällt.

9. Hängefördersystem nach einem der Ansprüche 1 bis 8, **dadurch gekennzeichnet,** daß der Wagen (8) und die Palette (9) übereinander auf einer gemeinsamen, zwei Laufbahnen (7a, 7b) aufweisenden, zweiten Schiene (7) in der Ladegasse (6) verfahrbar sind.

10. Hängefördersystem nach Anspruch 9, **dadurch gekennzeichnet,** daß die zweite Schiene (7) ein Profil mit einem oberen und einem unteren Schenkel (7a, 7b) aufweist, wobei die Laufbahn für den Wagen (8) auf dem oberen Schenkel (7a) und die Laufbahn für die Palette (9) auf dem unteren Schenkel (7b) angeordnet ist.

11. Hängefördersystem nach einem der Ansprüche 1 bis 10, **dadurch gekennzeichnet,** daß die zweite Schiene (7) mit Verriegelungsöffnungen (44, 49) versehen ist, in die ein Verriegelungsbolzen (43, 48) zum Verriegeln des Wagens (8) und/oder der Palette (9) an einer vorbestimmten Stelle der Ladegasse (6) eingreift.

12. Hängefördersystem nach Anspruch 11, **dadurch gekennzeichnet,** daß der Verriegelungsbolzen (43, 48) durch einen Hubmagneten (42, 45) betätigbar ist

13. Hängefördersystem nach einem der Ansprüche 1 bis 12, **dadurch gekennzeichnet,** daß die zweite Schiene (7) mit Steueröffnungen (35, 44, 49) zum Positionieren des Wagens (8) versehen ist.

14. Hängefördersystem nach Anspruch 13, **dadurch gekennzeichnet,** daß eine Mehrzahl Steueröffnungen (35, 44, 49) in Reihe angeordnet und von einem mit einem Inkrementgeber (52) verbundenen, angetriebenen Ritzel (53) abgegriffen werden.

15. Hängefördersystem nach Anspruch 13 oder 14, **dadurch gekennzeichnet,** daß durch die Steueröffnungen (35, 44, 49) der Strahl (58) eines optischen Sensors (57, 59) geführt ist.


## Claims

1. Overhead conveyor system having a plurality of first rails, which rest with their free ends aligned towards one another on a loading route, and having a pallet which can be moved on second rails in the loading route and is provided with a pallet rail, it being possible when moving the pallet for one free end of the pallet rail to be brought into alignment with free ends of the first rails for transferring transport means, characterised in that the pallet (9) is assigned a controlled and driven carriage (8) which can be moved in the loading route (6), can be moved separately from the pallet (9) and can be coupled automatically to the pallet (9).

2. Overhead conveyor system according to Claim 1, characterised in that the carriage (8) bears its own control unit (19).

3. Overhead conveyor system according to one of Claims 1 or 2, characterised in that a loading drive (20) for the transport means (14) is arranged on the carriage (8) for loading and unloading the pallet rail (10).

4. Overhead conveyor system according to Claim 3, characterised in that the loading drive (20) can be driven out laterally into the region of the first rails (2) and engages on a transport means (14).

5. Overhead conveyor system according to one of Claims 1 to 4, characterised in that a blocking device (29, 30) for the transport means (14) is provided at the free end (2a, 2b, 10a, 10b) of the rail (2, 10).

6. Overhead conveyor system according to Claim 5, characterised in that the blocking device (29, 30) can be opened in a direction leading away from the free end (2a, 2b, 10a, 10b) of the rail (2, 10) by the transport means (14) and, in a direction leading towards the free end (2a, 2b, 10a, 10b) of the rail (2, 10), by the carriage (8).

7. Overhead conveyor system according to one of Claims 4 to 6, characterised in that the blocking device (29, 30) can be opened by the loading drive (20) being driven out laterally.

8. Overhead conveyor system according to one of Claims 5 to 7, characterised in that the blocking device (29, 30) contains a swivellable lever (36, 39) which falls into a blocking position under the effect of gravity.

9. Overhead conveyor system according to one of Claims 1 to 8, characterised in that the carriage (8) and the pallet (9) can be moved in the loading route (6) one above the other on a common second rail (7) having two paths (7a, 7b).

10. Overhead conveyor system according to Claim 9, characterised in that the second rail (7) has a profile with an upper and a lower limb (7a, 7b), the path for the carriage (8) being arranged on the upper limb (7a) and the path for the pallet (9) being arranged on the lower limb (7b).

11. Overhead conveyor system according to one of Claims 1 to 10, characterised in that the second rail (7) is provided with locking openings (44, 49), in which a locking bolt (43, 48) engages for locking the carriage (8) and/or the pallet (9) at a predetermined point on the loading route (6).

12. Overhead conveyor system according to Claim 11, characterised in that the locking bolt (43, 48) can be actuated by a lifting magnet (42, 45).

13. Overhead conveyor system according to one of Claims 1 to 12, characterised in that the second rail (7) is provided with control openings (35, 44, 49) for positioning the carriage (8).

14. Overhead conveyor system. according to Claim 13, characterised in that a plurality of control openings (35, 44, 49) are arranged in a row and are picked off by a driven pinion (53) which is connected to an increment generator (52).

15. Overhead conveyor system according to Claim 13 or 14, characterised in that the beam (58) of an optical sensor (57, 59) is guided through the control openings (35, 44, 49).

**Revendications**

l.Système transporteur suspendu comportant une pluralité de premiers rails qui viennent s'appliquer sur un couloir de chargement par leurs extrémités libres orientées les unes vers les autres, et une palette mobile sur des deuxièmes rails dans le couloir de chargement laquelle est munie d'un rail à palette, tandis que lors du déplacement de la palette une extrémité libre du rail à palette peut être alignée sur les extrémités libres des premiers rails en vue du transfert de moyens de transport, caractérisé par le fait qu'à la palette (l9) est associé un chariot (8) piloté et entraîné par un moteur, mobile dans le couloir de chargement (6), chariot qui peut être déplacé séparément de la palette (9) et peut être accouplé automatiquement à ladite palette (9).

2. Système transporteur suspendu selon la revendication I, caractérisé par le fait que le chariot (8) supporte sa propre unité de pilotage (I9).

3. Système transporteur suspendu selon la revendication I ou 2, caractérisé par le fait que sur le chariot (8) est disposé un moteur de chargement pour les moyens de transport (I4) en vue du chargement et du déchargement du rail à palette (I0).

4. Système transporteur suspendu selon la revendication (3), caractérisé par le fait que le moteur de chargement (20) peut être déplacé latéralement jusqu'à parvenir dans la zone des premiers rails (2) et vient en prise avec un moyen de transport (I4).

5. Système transporteur suspendu selon l'une des revendications I à 4, caractérisé par le fait que sur l'extrémité libre (2a, 2b, I0a, I0b) du rail (2, I0) est prévu un dispositif de blocage (29, 30) pour les moyens de transport (I4).

6. Système transporteur suspendu selon la revendication 5, caractérisé par le fait que le dispositif de blocage (29, 30) doit être ouvert dans une direction du moyen de transport (I4) s'écartant de l'extrémité libre (2a, 2b, I0a, I0b) du rail (2, I0) et dans une direction du chariot (8) conduisant vers l'extrémité libre (2a, 2b, I0a, I0b) du rail (2, I0).

7. Système transporteur suspendu selon l'une des revendications 4 à 6, caractérisé par le fait que le dispositif de blocage (29, 30) doit être ouvert par le moteur de chargement (20) faisant saillie latéralement.

8. Système transporteur suspendu selon l'une des revendications (5 à 7) caractérisé par le fait que le dispositif de blocage (29, 30) contient un levier oscillant (36, 39) lequel descend dans une position de blocage sous l'effet de la force de gravité.

9. Système transporteur suspendu selon l'une des revendications 1 à 8, caractérisé par le fait que le chariot (8) et la palette (9) superposés l'un à l'autre, sont mobiles dans le couloir de chargement 6 sur un deuxième rail (7) commun muni de deux voies de roulement (7a, 7b).

I0. Système transporteur suspendu selon la revendication 9, caractérisé par le fait que le deuxième rail (7) présente un profilé comportant une aile supérieure et une aile inférieure (7a, 7b), la voie de roulement pour le chariot (8) étant disposée sur l'aile supérieure (7a) et la voie de roulement pour la palette (9) sur l'aile inférieure (7b).

II. Système transporteur suspendu selon l'une des revendications I à I0, caractérisé par le fait que le deuxième rail (7) est muni d'orifices de verrouillage (44, 49) dans lesquels s'insère un axe de verrouillage (43, 48) en vue du blocage du chariot (8) et/ou de la palette (9) en un point prédéterminé du couloir de chargement (6).

I2. Système transporteur suspendu selon la revendication II, caractérisé par le fait que l'axe de verrouillage (43, 48) peut être commandé par un aimant de levage (42, 45).

I3. Système transporteur suspendu selon l'une des revendications I à I2, caractérisé par le fait que le deuxième rail (7) est muni d'orifices (35, 44, 49) de pilotage pour le positionnement du chariot (8).

I4. Système transporteur suspendu selon la revendication I3, caractérisé par le fait qu'une pluralité d'orifices de pilotage (35, 44, 49) sont disposés sur une rangéee et parcourus par une roue à ergot (53) entraînée par un moteur, reliée à un générateur incrémentiel (52).

I5. Système transporteur suspendu selon la revendication I3 ou I4, caractérisé par le fait que le rayon (58) d'une cellule photo-électrique (57, 59) traverse les orifices de pilotage (35, 44, 48).

FIG.1

FIG.2

EP 0 344 804 B1

FIG.3

FIG. 4

FIG.5

FIG.6

FIG. 7